# DEMANDE DE BREVET EUROPEEN

(11) **EP 0 969 391 A1**
(43) Date de publication de la demande: **05.01.2000**
(21) Numéro de dépôt: 99401593.1
(22) Date de dépôt: 25.06.1999
(51) Int. Cl.: G06F 17/30, G06F 9/44

(54) **Procédé pour l'optimisation des accès à une base de données**

(30) Priorité: 30.06.1998 FR 9808294
(71) Demandeur: BULL S.A., 78434 Louveciennes Cedex (FR)
(72) Inventeur: Richard, Jean-Luc, 75017 Paris (FR); Grignac, Alain, 78150 Le Chesnay (FR)
(74) Mandataire: Denis, Hervé

(57) **Abrégé**

La présente invention concerne un procédé pour l'optimisation des accès à une base de données.

Ce procédé permet aux applications clientes de demander au serveur CMIS-DB, par configuration en ligne, de spécialiser la représentation générique pour les classes d'objets pour lesquels les temps d'accès doivent être optimisés afin de diminuer les temps de recherche des instances d'objets sélectionnées, par l'accomplissement d'une étape de configuration du stockage physique d'une classe d'objets à optimiser, qui consiste en la création d'une instance d'objet de la classe de définition de stockage (mocStorageDefinition) dans laquelle sont déclarés le ou les attributs de la classe à optimiser qui seront indexés lors du stockage physique sur disque.

## Description

La présente invention concerne un procédé pour l'optimisation des accès à une base de données.

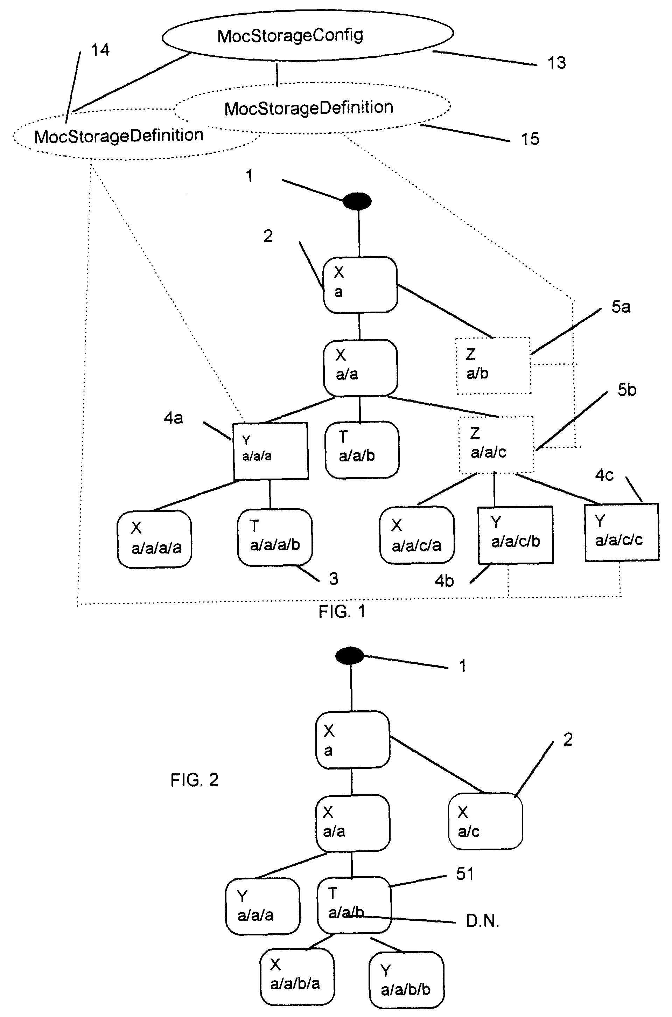

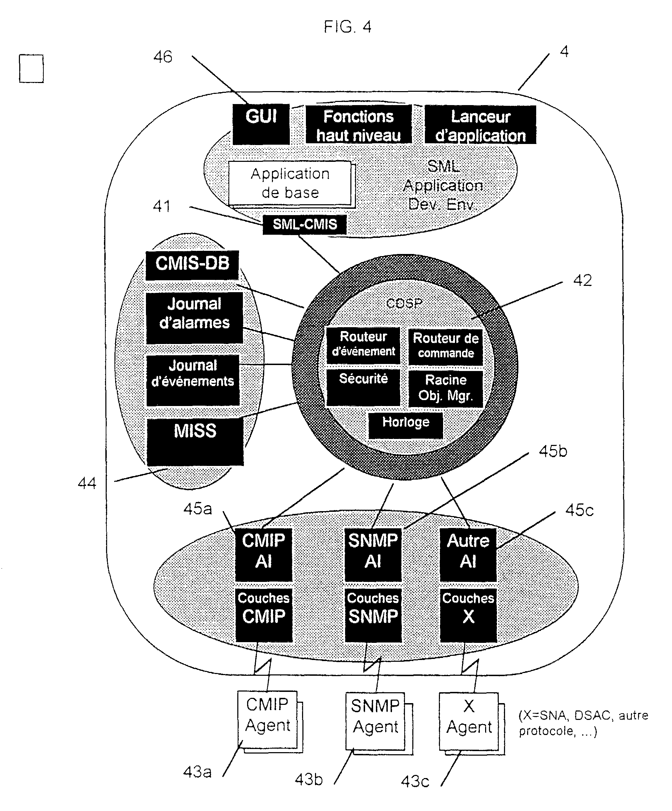

Les services d'accès aux informations d'une MIB reposent sur le standard CMIS (Common Management Information Service recommendation ITU-T X.710), qui décrit les opérations que l'on peut effectuer sur les objets spécifiés suivant le modèle du standard G.D.M.O. (Guidelines for the Definition of Managed Objects, c'est-à-dire Directives pour la définition des objets administrés, recommandation ITU-T X.722). La présente invention utilise le service de gestion d'informations dans le standard CMIS. Ce service est attaché au CDSP (figure 4, 42) (CMIS Dispatcher Process) qui est un service d'échange de paquets CMIS entre entités de la plate-forme OpenMaster™. CDSP est un routeur de paquet pour le service d'informations d'administration, c'est-à-dire un système de transfert de données entre deux entités utilisant le même protocole. Les applications d'administration font appel soit à des agents (43a, 43b, 43c), soit à des services locaux de la plate-forme qui permettent de gérer localement une base d'informations d'administration hiérarchisée sous forme d'arbre d'objets (MIB, Management Information Base), sans accès réseau. Dans ces bases d'informations d'administration (MIB), toutes les ressources sont représentées sous la forme d'objets dans un arbre d'objets tel que représenté en figure 2.

Les objets sont eux-mêmes regroupés en classes. L'objet d'une classe donnée comporte un certain nombre d'attributs et chaque instance d'objets a un nom (DN). L'adressage se fait par nom distinctif DN (Distinguished Name). Par exemple le DN de l'objet (51, figure 2) est "a/a/b".

La figure 4 représente le fonctionnement d'un service de gestion d'informations. Ce service utilise une architecture à deux niveaux. Le premier niveau est constitué d'une entité manager (4) jouant un rôle d'administrateur qui doit visualiser et contrôler des ressources, consulter des caractéristiques, etc. Le second niveau est constitué d'entités agent (43a à 43c) distantes ou locales qui maintiennent les objets sur lesquelles doivent s'appliquer les opérations émises par le niveau administrateur. Le but de l'agent est d'entretenir un modèle de la ressource qu'il gère, modèle consigné et normalisé dans une MIB. Au moins un agent est donc installé sur chaque machine du réseau et peut contrôler un ensemble de ressources locales ou distantes sous la direction d'un ou de plusieurs administrateurs. Un administrateur communique avec chaque agent en utilisant un protocole de gestion standard. Le système d'administration OpenMaster™ commercialisé par la société BULL comprend un ou plusieurs administrateurs ISM Manager (Integrated System Management) et plusieurs agents (ISM/Agent). De plus, d'autres agents commercialisés par d'autre sociétés peuvent être contrôlés par l'administrateur OpenMaster™ via des protocoles standards.

Le mécanisme administrateur-agent est basé sur un modèle d'objet, dans lequel la modélisation d'une ressource constituée, par exemple, d'éléments du système, de logiciels, d'états, d'utilisateurs, etc., s'appuie sur une approche et une structuration en objets des informations de management. Les équipements "réels" d'un système en réseau (un ordinateur, une imprimante, un circuit, etc.) sont représentés par des objets abstraits organisés dans une base d'informations d'administration (MIB, Management Information Base). Les caractéristiques de ces objets (nom d'un ordinateur, caractéristiques des équipements périphériques, les statuts de ces équipements tels qu'une imprimante, etc.) sont appelés les attributs des objets.

Les objets sont divisés en classes d'objets administrés plus souvent appelés MOCs (Managed Object Classes), où chaque MOC représente un type de ressources. Les MOCs définissent les informations que la MIB va contenir pour chaque type de ressources, c'est à dire quels attributs l'objet va avoir. Les MOCs peuvent être interprétées comme une partie du "schéma" de la MIB. L'administrateur enregistre une classe d'objets MOC dans le langage GDMO et il déclare entre autres les classes et pour chaque classe, une liste d'attributs, des liens de nommage etc. Cette description est enregistrée dans un module de définition des objets GDMO attachés à l' administrateur ISM (41). Chaque MOC est instanciée en plusieurs instances d'objets administrés MOIs (Managed Object Instances) représentant les occurrences réelles de ce type de ressources.

Prenons l'exemple de trois imprimantes (Imprim1, Imprim2, Imprim3) représentées par trois instances d'objets (P1, P2, P3) dans une base d'informations d'administration (MIB), Les attributs de l'objet représentant l'imprimante sont "état de l'imprimante" et "utilisateur". Une classe d'objets MOC "imprimante" (printers) peut donc être définie ayant pour attributs "état de l'imprimante" et "utilisateur". Les instances d'objets (MOls) de la classe "imprimante" peuvent être les suivantes:

| MOI | MOC | ATTRIBUTS | |
|---|---|---|---|
| (instance) | Classe | état de l'imprimante | utilisateur |
| Imprim 1 | Printer | activée | aucun |
| Imprim 2 | Printer | désactivée | aucun |
| Imprim 3 | Printer | activée | Joe |

L'état (status) de la ressource Imprimante 1 est activée et sans utilisateur actuel dans l'instanciation de l'exemple ci-dessus. Cet exemple comporte encore les instances Imprim 2 et Imprim 3. Une application telle que "ISM Monitor" fournie par le système d'administration OpenMaster™ (4) permet d'afficher les MOls et leurs états. De même, ISM-Monitor (46) peut afficher sous forme de tableau les attributs de n'importe quelle MOI : par exemple les attributs "état de l'imprimante" et "utilisateur actuel" pour une MOI quelconque de la MOC "Printers".

L'ensemble des objets administrés forme une base d'informations d'administration (MIB).

On appelle "MIBlet" un sous arbre directement attaché à la racine de l'arbre distinct d'une base d'information d'administration (MIB). Malgré la division en MIBlets, la base d'informations d'administration (MIB) du système d'administration OpenMaster™ est reconnue comme une entité composite unique, avec tous les MIBlets attachés à la même MIB. On appelle "Rootlet" un objet MOI à la racine d'une MIBlet. L'administrateur OpenMaster™ voit le système distribué à travers les objets de la MIB et le contrôle du système se fait par des manipulations des objets de la MIB et de leurs attributs. Les objets sont visibles grâce aux agents ou aux gestionnaire d'objets attachés à l'administrateur OpenMaster™ qui cartographient (mapping) les équipements en MIB sous forme d'arbre d'objets. Un agent peut représenter l'état d'un équipement par la voie d'un objet associé correspondant représenté dans la MIB. Cette cartographie peut associer un objet avec plusieurs équipements "réels", de même qu'un équipement peut être modélisé sous la forme de plusieurs objets. L'administrateur OpenMaster™ (4) envoie des commandes aux agents (43a à 43c) et les agents (43a à 43c) envoient des réponses à ses commandes et notifient des événements à l'administrateur OpenMaster™ (4) à travers des agents intégrateurs (45a) en utilisant un protocole tel que SNMP (Simple Network Management Protocol, 45a), CMIP (Common Management Information Protocol, 45b), ou autres tels que (45c) DSAC/AEP (Distributed Systems Administration and Control/ Admidministrative Exchange Protocol). Chaque protocole d'administration fournit un certain nombre d'opérations simples, par exemple le protocole CMIP fournit toutes les fonctions du standard CMIS à savoir les suivantes:
- l'administrateur (41) peut lire les attributs d'un objet MIB (I' opération M-GET). L'agent (43) répond à une requête M-GET en donnant des informations sur l'équipement;
- l'administrateur (41) peut modifier les attributs d'un objet MIB (l'opération M-SET). L'agent (43) modifie l'équipement "réel" en fonction des nouvelles valeurs d'attributs fournies par l'administrateur;
- l'administrateur (41) peut exécuter une action sur un objet MIB (l'opération M-ACTION). L'agent (43) exécute une action sur l'équipement en fonction de l'action demandée par l'administrateur sur l'objet abstrait;
- l'administrateur (41) peut créer et supprimer des objets de la MIB (les opérations M-CREATE et M-DELETE);
- l'agent (43) peut notifier un événement survenant sur un objet de la MIB à l'administrateur (I' opération M-EVENT). L'agent envoie des informations d'un événement concernant un objet abstrait pour décrire un événement survenu sur un équipement "réel".

Une base d'informations d'administration (MIB) a une hiérarchie d'arborescence stricte, c'est à dire que chaque instance d'objet (MOI) a exactement une et une seule MOI supérieure. L'arbre formé par la base d'informations d'administration MIB est appelé "arbre de contenance" (containment tree). Les instances d'objets administrés (MOIs) sont nommées par leur position dans l'arbre de contenance de la façon suivante :

Chaque MOI possède un nom distinctif relatif (relative distinguished name, RDN) qui différencie les MOls ayant un même et unique MOI supérieur (père). Un des attributs de chaque classe d'objets administrés (MOC) est choisi pour spécifier le RDN de l'instance pour un MOI supérieur donné. Cet attribut appelé l'attribut de nommage (naming attribute) est identifié dans les formulaires (templates) GDMO appelés liens de nommage (name binding). Une MOC peut avoir plusieurs liens de nommage supérieurs potentiels, mais chaque MOI utilisera uniquement l'un d'entre eux. Chaque MOI a également un nom distinctif complet (Full Distinguished Name) unique pour la totalité de la MIB. Le nom distinctif global (DN) d'un objet consiste en son nom distinctif relatif (RDN) joint au nom distinctif (DN) de son supérieur c'est à dire que le nom distinctif (DN) d'une instance d'objets administrés (MOI) contient son propre nom distinctif relatif (RDN) plus les noms distinctifs relatifs (RDNs) de tous ses supérieurs dans l'arbre de contenance jusqu'à la racine.

La base d'informations d'administration (MIB) permet d'établir d'autres relations entre objets que les relations réalisées dans l'arbre de contenance par nom distinctif. Ces relations sont réalisées à l'aide d'attributs de relation (relationship attributes). Ces attributs contiennent le nom distinctif global DN (Distinguished Name) d'autres objets . Ils sont utilisés comme des références d'un objet à l'autre.

Un des administrateurs d'objet local à l'administrateur ISM-Manager s'appele CMIS-DB. Il est chargé de stocker une partie de la MIB locale. La rémanence de ces objets stockés est assurée par des fichiers ISAM (Index Sequential Access Method). Cette technologie (ISAM) qui décrit les structures d'articles (records) est une méthode d'accès aux fichiers structurés sous forme d'articles découpés sur un ou plusieurs index et des informations de donnée.

Lorsque l'application de l'administrateur veut sélectionner un des objets pour poser une opération CMIS comme par exemple un M-GET, il doit spécifier l'instance d'objet de base (BOI, Base Object Instance), la portée (scope) et le "filtre" comme argument de l'opération .

L'instance d'objet de base BOI permet d'identifier un objet dans une base d'informations d'administration (MIB) qui est le point de départ d'une évaluation du couple portée-filtre dans l'arbre d'objets. La portée (scope) sélectionne une portion de l'arbre depuis cet objet de base. Par exemple, la portée (scope) "Whole subtree" permet de sélectionner tous les sous arbres d'un objet donné. Parmi tous les objets de la portée (scope), les objets sélectionnés sont ceux pour lesquels l'évaluation du filtre est vrai. L'opération est effectuée sur les objets réellement sélectionnés. L'administrateur envoie un M-GET sur des objets et CMIS-DB lit et retourne à l'application la valeur des attributs des objets sélectionnés.
Pour atteindre une instance d'objets de base (BOI), l'administrateur CMIS-DB doit passer d'objet père en objet fils jusqu'à atteindre le noeud de l'objet de base. Cette opération de navigation peut être longue, si pour passer d'un noeud à l'autre, il faut lire physiquement l'ensemble des fils d'un noeud et parmi ceux-là choisir celui qui a le bon RDN, et ainsi de suite. Une fois, que l'ordinateur a atteint l'instance de base objet, il doit lire les attributs des objets de la base qui correspondent à la portée (scope) pour pouvoir évaluer le filtre en mémoire. Or, la condition générique du stockage des objets imposée par l'ancienne version de CMIS-DB est de lire physiquement tous les objets appartenant à la portée (scope) sélectionnés avant d'évaluer le filtre en mémoire. Lorsqu'on a beaucoup d'objets subordonnés à un objet, les performances peuvent alors être très faibles. Pour comprendre le problème, il convient de rappeler que le stockage générique dans les versions précédentes de CMIS-DB permet de gérer des objets dans la base sans requérir de pré-déclaration de leur format dans le serveur. Ceci est un avantage par rapport à d'autres systèmes qui demandent d'abord de compiler la description des objets dans la base d'objets pour pouvoir les traiter, et ne permettent donc pas de créer d'instance de la classe des objets tant que cette classe n'a pas été décrite. CMIS-DB, par contre, effectue automatiquement cette opération, mais le stockage générique par défaut des objets de la MIB pose les problèmes de performances décrits précédemment. CMIS-DB utilise des structures de données permettant de créer génériquement sur le disque physique du système des instances de n'importe quelle classe d'objets de la MIB sans en connaître au préalable la description selon GDMO.

Dans la représentation générique de CMIS-DB, la connaissance de la structure des objets est obtenue lors des opérations CMIS M-CREATE de création des instances, émises par les applications clientes vers le serveur CMIS-DB.

Ce sont les applications qui formatent correctement les M-CREATE en utilisant en ligne les descriptions GDMO enregistrées dans le module OpenMaster™ qui compile et stocke les définitions GDMO des objets gérés par l'administrateur ISM.

Un but de la présente invention est de proposer un procédé pour l'optimisation des accès à une base de données organisée en arbres, et plus particulièrement pour un serveur d'administration gérant une très grosse base d'informations d'administration (MIB) et permettant de réaliser des opérations complexes sur un très grand nombre d'objets tout en diminuant les temps de recherche des instances sélectionnées par les arguments de portée (scope) et filtre des opérations CMIS.

Ce but est atteint par le fait que le procédé pour l'optimisation des accès à une base de données est caractérisé en ce qu'il permet aux applications clientes de demander au serveur CMIS-DB, par configuration en ligne, de spécialiser la représentation générique pour les classes d'objets pour lesquels les temps d'accès doivent être optimisés afin de diminuer les temps de recherche des instances d'objets sélectionnées, par l'accomplissement d'une étape de configuration du stockage physique d'une classe d'objets à optimiser, qui consiste en la création d'une instance d'objet de la classe de définition de stockage (mocStorageDefinition) dans laquelle sont déclarés le ou les attributs de la classe à optimiser qui seront indexés lors du stockage physique sur disque.

Selon une autre particularité, le procédé comprend une deuxième étape consistant à écrire un fichier ISAM (Index Sequential Access Method, methode d'accès séquentiel par index) par classe d'objets administrés (MOC) optimisée, fichier spécifique avec sa structure d'index propre contenant la représentation de toutes les instances de cette MOC.

Selon une autre particularité, le procédé comprend une troisième étape consistant à analyser les filtres véhiculés par les opérations CMIS émises par les utilisateurs pour identifier, dans une étape de préfiltrage, si oui ou non l'évaluation de ce filtre peut se faire en utilisant un des index positionnés dans la base.

Selon une autre particularité, la valeur des index physiques pour indexer les attributs spécifiés dans l'instance d'objet de la classe mocStorageDefinition correspondant à la MOC à optimiser comporte la référence unique du noeud de l'instance père (fatherMOlnodeRef) de l'instance de l'objet managé sur 4 octets de long et la succession des attributs 1 à i nécessaires à la classe d'objets managés à optimiser.

Selon une autre particularité, lorsqu'un préfiltrage par les attributs indexés dans la base de données sous-jacente est utilisable, l'exécuteur des requêtes sur la base d'informations d'administration (MIB query performer) détermine les arguments de l'opération de lecture physique ne permettant de relire dans la base sous-jacente que les seuls subordonnés qui sont indexés par les valeurs des attributs sélectionnés pour le préfiltrage.

Selon une autre particularité, la classe d'objets administrés (mocStorageDefinition) permet de spécifier une pluralité d'attributs indexables qui seront physiquement stockés dans l'index au moment de la création de l'objet.

Selon une autre particularité, la pluralité des index décrits dans l'objets administré mocStorageDefinition peut être réorganisée à tout moment en réaffectant un niveau d'index différent à un ou plusieurs attributs ou en activant ou désactivant les index via la modification de l'objet de classe mocStorageDefinition.

Selon une autre particularité, un module exécuteur de requête du service de gestion d'informations CMIS-DB effectue, après détection d'une possibilité de préfiltrage par la connaissance de la mocStorageDefinition de chaque classe optimisée, la lecture dans la base de données sous-jacente des seuls objets de la portée qui sont indexés par les valeurs des attributs sélectionnés pour le préfiltrage.

Selon une autre particularité, des moyens sont prévus pour permettre à l'utilisateur d'effectuer le choix de l'attribut ou du groupe d'attribut e plus discriminant en classant par ordre décroissant les index définis.

Selon une autre particularité, l'optimiseur reconnaît les filtres qui peuvent donner lieu à un préfiltrage pour les index : ce sont les filtres constitués d'une clause ET englobant :
- un item d'égalité sur l'attribut objectClass, valeur égale à l'identifiant d'une des MOC optimisées,
- une expression logique constituée uniquement de clauses ET (AND) englobant des items de comparaison sur les attributs déclarés dans les index de cette MOC optimisée.

D'autres particularités et avantages de la présente invention apparaîtront plus clairement à la lecture de la description ci-après faite en référence aux dessins annexés dans lesquels :
- la figure 1 représente un exemple d'une base d'informations d'administration (MIB) stockée dans un service commun de gestion d'informations indexé (CMIS-DB),
- la figure 2 représente, un arbre d'objets constituant une partie de la MIB,
- la figure 3 l'architecture du module de gestion d'information pour base de donnée CMIS-DB,
- la figure 4 représente l'architecture de l'entité manager du produit OpenMaster™,
- la figure 5 représente une fenêtre d'affichage d' une instance d' objet de classe "mocStorageDefinition" générée par une interface graphique utilisateur (GUI) faisant partie de ISM-MONITOR et permettant la définition et l'activation ou désactivation des attributs indéxés d'une classe d'objet optimisée.

L'idée principale de l'invention est d'utiliser un mécanisme d'indexation que l'on trouve dans les fichiers indexés de type ISAM (Index Sequential Access Method, methode d'accès séquentiel par index) ou dans les bases de données relationnelles ou orientées objets pour pouvoir indexer certains attributs d'objets. Il faut rappeler que le stockage physique des informations nécessite de choisir une technologie de base. Il existe principalement la technologie des bases de données objets, les bases de données relationnelles et la technologie ISAM. Le choix des fichiers ISAM pour le stockage physique d'une MIB est connu dans les anciennes versions d'un module de service commun de gestion d'informations non indexables pour base de donnée CMISNI-DB et est toujours utilisé dans la version actuelle. Mais le même mécanisme est applicable sur d'autres technologies de bases telles que les SGBDO (Système de Gestion de Bases de Données Objets) et les SGBDR. Le procédé décrit ne restreint donc pas le mécanisme de stockage physique à la seule technologie ISAM.

Les articles (record) dans un fichier ISAM sont indexés. Pour accéder directement à un article, il y a deux possibilités : soit donner le numéro de l'article, soit faire une recherche sur une des valeurs qui est déclarée comme champ d'index dans l'article. ISAM implémente un algorithme qui permet de diminuer le nombre de recherches physiques : les "B+tree" forment des structures de données qui permettent d'accélérer les recherches physiques de chaînes (string) par calculs de clés et création de tables intermédiaires. A partir d'une valeur recherchée, les "B+tree" permettent de faire des accès rapides pour retrouver le plus rapidement possible les seuls articles (record) qui ont cette valeur dans l'index. L'ordinateur peut ainsi aller chercher physiquement sur le disque tous les articles (record) qui ont une certaine valeur index. Cette opération est plus rapide que de lire un par un tous les articles, de tester en mémoire si la valeur lue correspond à la valeur demandée.

Pour créer un ensemble d'objets dans une base, la plupart des agents qui gèrent des bases de gestion d'informations MIB demandent à connaître, en langage GDMO, la définition des objets managés.

Dans la présente invention, CMIS-DB accepte de créer des objets sans connaître leur définition GDMO, en les représentant dans la base de manière générique. La présente invention permet à l'utilisateur d'indexer les instances des classes d'objets managés (MOI) qu'il interroge le plus souvent. Pour cela, l'administrateur doit créer une instance d'objets particulière de classe appelée "mocStorageDefinition" dans laquelle l'administrateur décrit la définition de la structure des index qui seront appliqués aux instances d'objets managés de la classe (MOC) à optimiser. Ainsi comme représenté figure 1 l'administrateur a créé une instance d'objets de classe mocStorageDefinition (15) pour la classe d'objet Z (5a, 5b) et une autre instance pour la classe d'objets Y (4a, 4b, 4c). Ainsi, pour chaque type de classe (MOC) d'objets optimisés et managés, un fichier ISAM est créé dans lequel sa clé est coupée en deux, une clé étant pour ISAM un simple champ identifié dans l'article (record) du fichier. La première partie contient la référence du père de l'instance et est utilisée par le moteur de parcours et la seconde partie contient la ou les valeurs des attributs indéxés de cette instance.

La présente invention permet donc à l'utilisateur de définir une représentation physique indexée différente de la représentation générique de CMIS-DB, afin d'optimiser les accès les plus fréquents. En effet, pour optimiser les recherches d'instances d'un certain nombre de classe d'objets managés (MOC), l'utilisateur a la possibilité de déclarer les classes d'objets managés (MOC) dont il veut optimiser les consultations. L'optimisation consiste à choisir dans une classe d'objets managés (MOC) donnée, le ou les attributs destinés à être utilisés comme critère de filtrage dans les recherches que l'utilisateur veut optimiser. Ces attributs seront nommés "attributs indexés". De ce ou de ces attributs choisis, le module CMIS-DB en déduit un ou plusieurs nouveaux index à introduire dans la représentation des instances de cette classe d'objets managés (MOC). Une classe d'objets managés (MOC) optimisée est de ce fait représentée par un type de noeud (5, 4 ; figure 1) différent physiquement du noeud générique (2, 3 ; figure 1) et spécifique à chacune des classes d'objets managés (MOC) optimisées.

L'objet de configuration "mocStorageConfig" contient l'ensemble des classes "mocStorageDefinition" (14, 15) définies pour le module CMIS-DB. La classe "mocStorageDefinition" (14, 15) permet à l'utilisateur de définir pour chaque classe à optimiser identifiée par l'identifieur "moclD" quels sont les attributs à indexer. Les opérations autorisées sur les objets de classe "mocStorageDefinition" sont:
- les objets M-CREATE et M-DELETE sur une base de données CMIS-DB ne contenant encore aucune instance de la classe à optimiser.
- les opérations M-GET,
- les opérations M-SET sur les seuls attributs "usedlndex" et index 1, index 2, index 3, index 4 et index 5.

La description en langage GDMO de la classe mocStorageDefinition est la suivante :

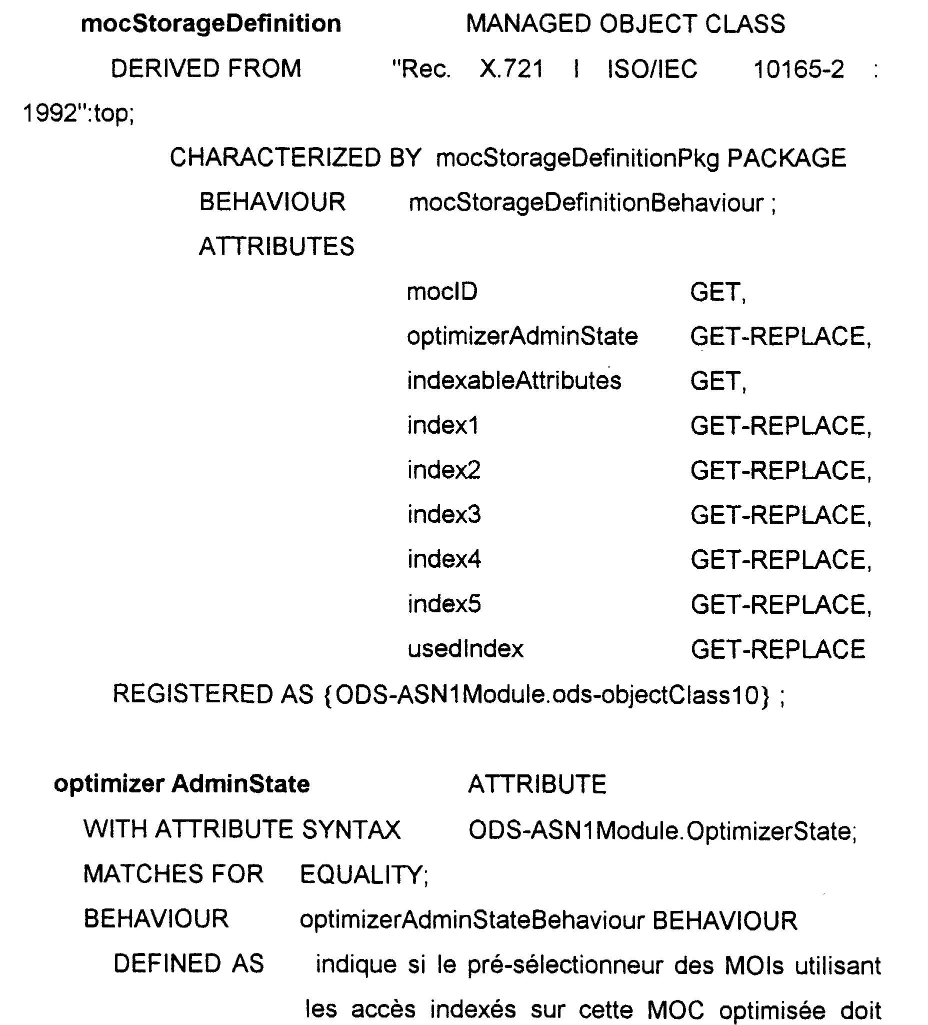

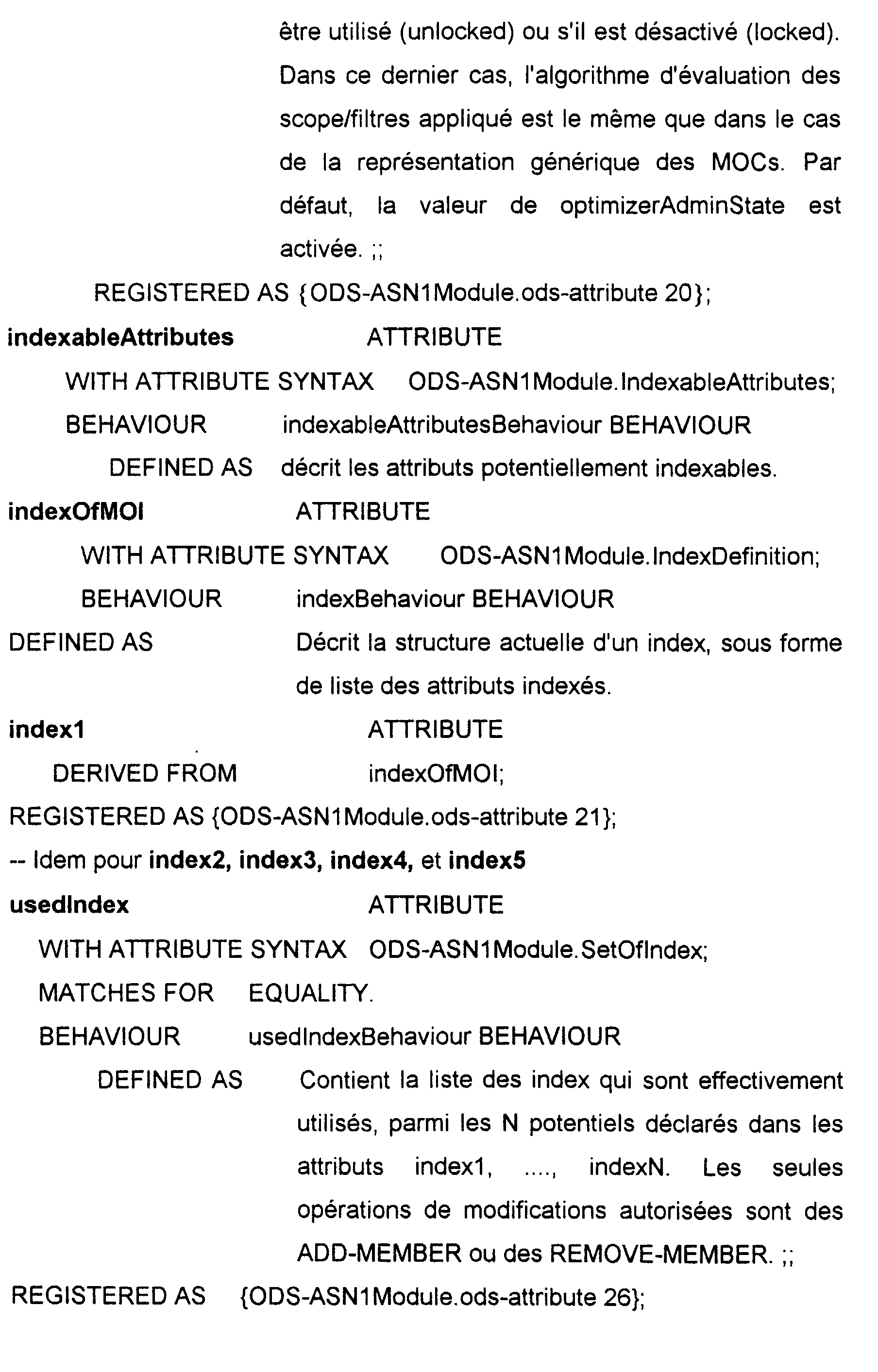

Toutes les opérations CMIS relatives aux objets gérés par CMIS-DB sont acheminées entre l'application de gestion et CMIS-DB par l'infrastructure (CDSP) de communication de l'entité manager de OpenMaster™. Ainsi, CMIS-DB est considéré par les applications PoenMaster™ comme un administrateur d'objets (object manager) qui stocke et gère une partie de la MIB dans une base de donnée.

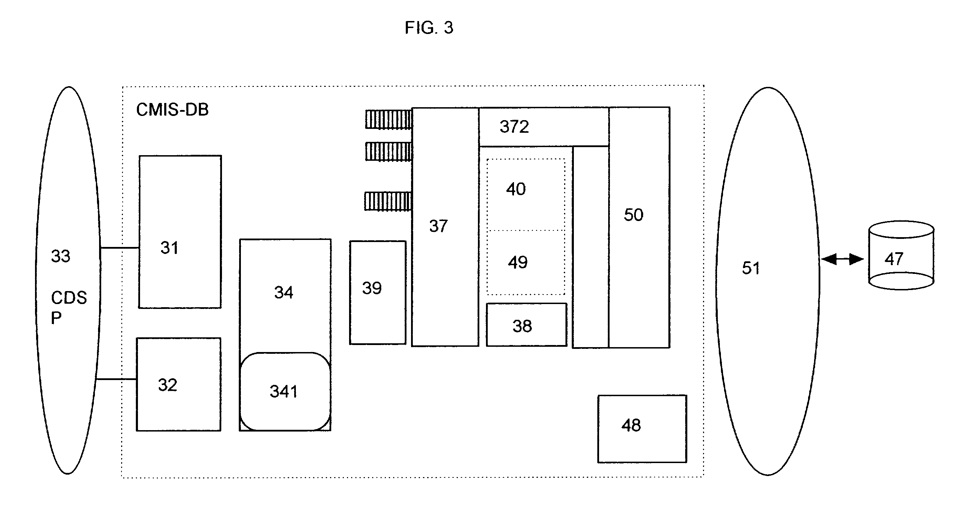

Le serveur CMIS-DB interagit avec le CDSP (33, fig.3) à travers une interface (32). Les interactions entre tous les composants de l'administrateur ISM sont réalisés à l'aide de messages CMIS acheminés par CDSP.

La figure 3 représente l'architecture de CMIS-DB selon l'invention qui comprend un gestionnaire d'opérations CMIS (CMIS operations handler) (31) dialoguant selon le protocole du (CDSP) (33) avec l'infrastructure de communication, un module programmable d' extension utilisateurcodé en SML (SML MIB toolkit) (34), un module (37) découpé en un sous module exécuteur de requête (MIB queries performer), un sous module de navigation, d'évaluation de portée et de filtre, un sous module optimiseur par préfiltrage (372), un traducteur de forme globale en forme locale (38), un module d'import/export (39), une antémémoire de l'arbre de contenance d'objets (cache of containment tree) (40), une antémémoire des instances de gestion d'objet (cache of MOls)(49), un module d'accès à la mémoire physique (50) qui interface le serveur de la base de données sous-jacente (51), un module administrateur de transactions d'accès physique (storage transaction manager) (48) et un disque physique (47).

Le kit de programme de développement (SML MIB toolkit) (34) charge les éventuelles extensions SML (Systems Management Language) (341) de l'utilisateur et fournit en SML les primitives d'accès à la base d'informations d'administration (MIB) gérée par le service CMIS-DB. En outre, le kit de développement de programme (SML MIB toolkit) (34) évalue les pré-conditions et les post-conditions posées par l'utilisateur, lors de chaque opération sur la base d'informations d'administration (MIB) et exécute les extensions SML qui sont déclenchées sur ces conditions.

L'exécuteur des requêtes (37) sur la base d'informations d'administration effectue réellement la requête ou l'opération sur la représentation logique de la base d'informations d'administration (MIB). Il navigue en fonction de l'argument de l'instance d'objet de base (BOI, baseObjectInstance) de la requête , pour obtenir l'instance initiale de l'évaluation de la portée (scope) et du filtre.

Le mode de fonctionnement de l'exécuteur des requêtes (37) de la base d'informations d'administration (MIB query performer) dépend des arguments des opérations portée (scope) et "filtre" de l'opération. Lorsque aucun préfiltrage par les attributs indexés dans la base de données sous-jacente n'est utilisable, l'exécuteur des requêtes de la base d'informations d'administration (MIB query performer) (37) parcourt la liste de tous les fils pour lire les instances de gestion d'objets (MOI) correspondant à la portée (scope).La décision de savoir si un préfiltrage peut être éxécuté ou non dépend de l'analyse de la structure du filtre.

La recherche optimisée des MOI sélectionnés par un filtre consiste à ne pas lire physiquement toutes les MOls appartenant à la portée (scope) CMIS pour leur appliquer l'évaluation du filtre mais à utiliser lorsque c'est possible, les index qui sont positionnés sur leur MOC dites optimisées, afin de ne lire qu'un sous-ensemble de ces instances MOls. Cette dernière opération est appelée "présélection ou préfiltrage" elle ne remplace pas l'étape d'évaluation du filtre sur chaque MOI remontée en mémoire qui a lieu systématiquement dans les deux cas. Le préfiltrage par les index peut donc remonter des MOls qui au final seront rejetées par l'étape d'évaluation du filtre CMIS, mais il ne doit pas oublier de lire une seule des MOls de la portée qui vérifient le filtre.

Les filtres CMIS doivent obligatoirement se conformer à une structure définie pour être reconnus par l'optimiseur de recherche des MOls que ces filtres sélectionnent.

Excepté la portée (scope) "base object only" qui n'est pas concernée par le mécanisme d'optimisation, le type de portée (scope) utilisé dans les requêtes n'a aucune influence sur les règles permettant de décider si une première sélection par les index est plus optimum qu'une lecture physique de toutes les MOls appartenant au scope.

Un filtre CMIS reconnu par l'optimiseur doit être une expression logique qui sélectionne uniquement des MOls de la même classe. Cette classe qui doit être une des MOC optimisées déclarées au module CMIS-DB.

Cette expression logique doit être constituée d'une clause ET (AND) englobant:
- un item d'égalité sur l'attribut objectClass, valeur égale à l'identifiant d'une des MOC optimisées.
- une expression logique constituée uniquement de clauses ET (AND) englobant des items de comparaison sur les attributs déclarés dans les index de la MOC optimisée. Ces comparaisons sur les attributs indexés ne peuvent être que des égalités, sauf lorsqu'une des opérations greaterOrEqual, lessOrEqual ou initialString porte sur le dernier élément de l'index (ou de la partie initiale de l'index) sélectionné.Par exemple pour une moc optimisée construite avec plusieurs index constitués avec les attributs (att.1; att.2; att.3) l'expresion logique pourra être la suivante:
att.1 = value1 & att.2 = value2 & att.3 = value3
- et éventuellement une autre expression logique qui porte sur les attributs qui ne sont pas déclarés dans les index de la MOC identifiée.

Plus formellement, la description des filtres CMIS reconnus par le préfiltrage est donnée par la grammaire suivante :

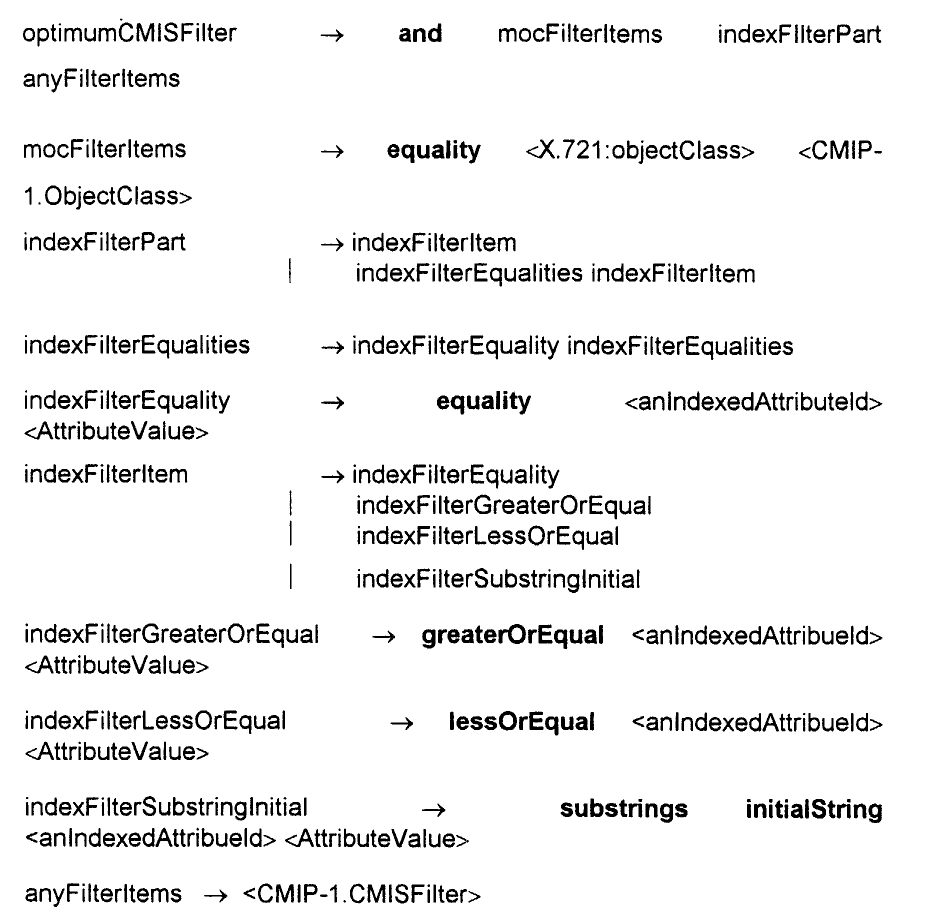

Dans cette grammaire, l'ordre introduit entre les différents items ne reflète pas un ordre syntaxique dans l'expression du filtre CMIS qui peut être quelconque, mais plutôt l'ordre physique des attributs tels qu'ils existent dans les index de la MOC optimisée.

Lorsqu'un préfiltrage est utilisable, l'exécuteur des requêtes (37) de la base d'informations d'administration (MIB query performer) lit dans la base sous-jacente les seuls subordonnés qui sont indexés par les valeurs des attributs sélectionnés pour le préfiltrage. Puis l'exécuteur des requêtes (37) de la base d'informations d'administration (MIB query performer) évalue le filtre sur chaque instance précédemment sélectionnée. Si l'évaluation est positive, il exécute l'opération sur la représentation logique de la base d'informations d'administration (MIB) et retourne la réponse individuelle au gestionnaire dudit service commun de gestion d'informations (CMIS handler) (31) ou au kit de développement de programme (MIB toolkit) (34).

La structure ISAM des records d'enregistrement des MOls des classes optimisées est celle de la représentation générique des MOls à laquelle on concatène le ou les attributs à utiliser dans les index secondaires spécifiés par l'utilisateur via les objets mocStorageDefinition. La structure de ces champs "indexableAttributeList" supplémentaires est comme spécifié ci-dessous :

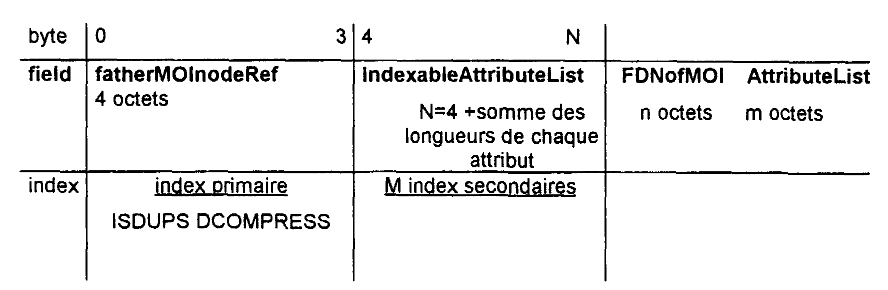

où **indexableAttributeList** a la structure suivante :

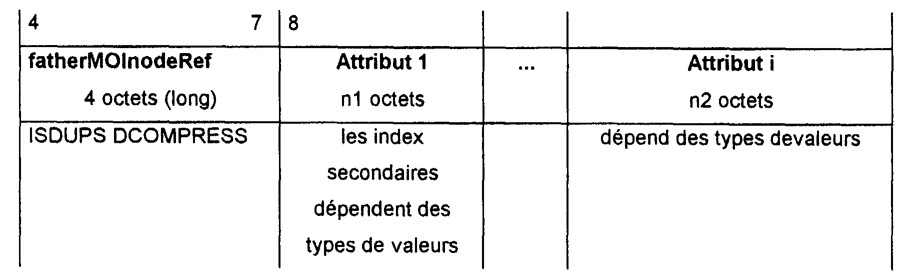

Dans le champ **indexableAttributeList** utilisable pour activer des index secondaires, les valeurs des attributs indexables sont stockés.

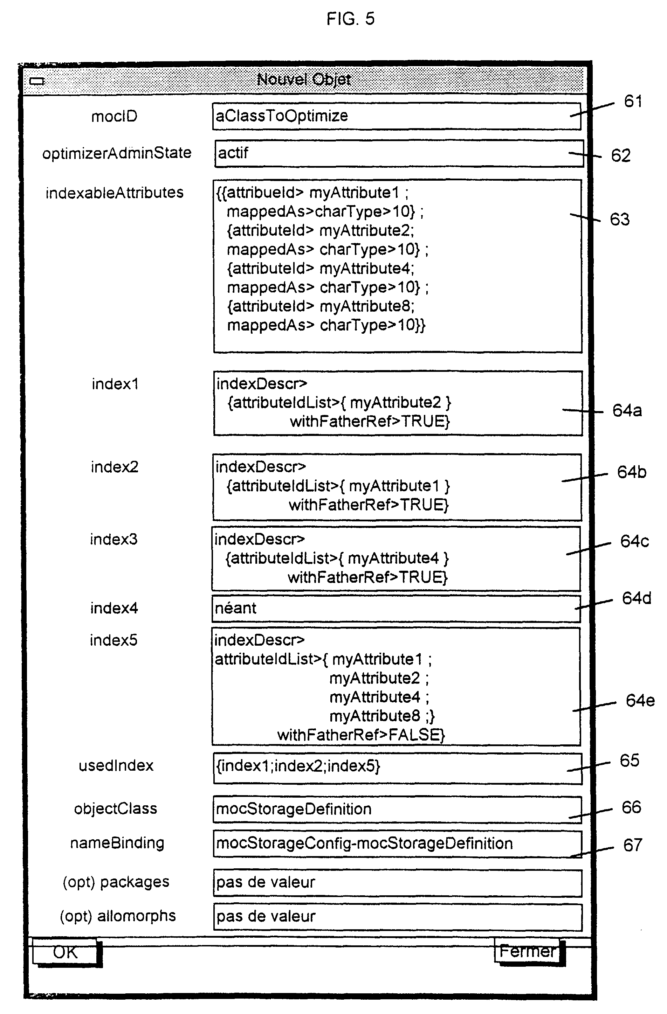

La figure 5 représente une instance de la classe "mocStorageDefinition" affichée à l'écran du terminal par une interface graphique permettant à l'utilisateur d'accéder à l'administrateur de CMIS-DB. Cette fenêtre permet à l'utilisateur de définir les attributs indexables, de les classer en ordre de discrimination, le choix de l'attribut le plus discriminant étant établi par déclaration dans l'objet mocStorageDefinition dans l'ordre décroissant des attributs à indexer.

Ainsi, cette fenêtre (61) est produite par ISM-Monitor qui permet d'afficher un premier pavé contenant le premier attribut (61, opClass0) constituant par définition l'identifieur "mocld" de la classe d'objets optimisée. Un deuxième pavé (62) visualise l'attribut état de la fonction d'optimisation et permet éventuellement de le faire passer de l'état actif (unlocked) à l'état inactif (locked). Dans ce dernier état, la fonction d'optimisation, c'est-à-dire l' étage de préfiltrage n'est pas utilisé. Un troisième pavé (63) permet d'afficher ou de créer la liste des attributs indexables, par exemple, en indiquant pour chaque attribut de la liste le nom de l'attribut "Attributld" et éventuellement de déclarer si nécessaire la structure physique de l'index par l'information "mappedAs > simple ISAMtype > inttype ou mappedAs > simple ISAMtype > doubletype, ce qui signifie dans ce cas que la représentation physique de l'attribut est du type double.

Un premier pavé d' index (64a) permet de définir le premier index, à savoir l'index considéré comme le plus discriminant par l'administrateur de CMIS-DB. Chaque pavé (64a à 64e) permet la définition de cinq niveaux différents d' index et permet de décrire une configuration d'index comprenant dans le cas des index (64a, 64b, 64c) un ou dans le cas de l'index (64e) plusieurs attributs ou aucun dans le cas de l'index (64d). Dans ce dernier cas, le quatrième index (64d) qui ne contient pas d'attribut n' existe pas. Chaque pavé (64a à 64e) peut aussi recevoir une information liant l'index avec le père de l'objet (withfatherRef > TRUE). Sur la figure 5 l'index (64d) comporte un champ non utilisé "CMIS nul", ce qui indique que la classe optimisée ne comporte que quatre index configurés. Un champ (65) permet de définir les index utilisés et de les activer selon les besoins de l'utilisateur. Un champ (66) donne le nom de la classe de l'objet. Un champ (67) permet de définir le lien de nommage avec la classe "mocStorageConfiguration".

Ainsi, l'on comprend que l'utilisateur peut, par déclaration des attributs indexés dans un ordre décroissant, influer sur le choix des attributs les plus discriminants et obtenir des résultats différents en rapidité de l'évaluation d'une opération de portée (scope) ou d'une opération "filtre".

D'autres modifications à la portée de l'homme de métier font également partie de l'esprit de l'invention.

## Revendications

1. Procédé pour l'optimisation des accès à une base de données, caractérisé en ce qu'il permet aux applications clientes de demander au serveur CMIS-DB, par configuration en ligne, de spécialiser la représentation générique pour les classes d'objets pour lesquels les temps d'accès doivent être optimisés afin de diminuer les temps de recherche des instances d'objets sélectionnées, par l'accomplissement d'une étape de configuration du stockage physique d'une classe d'objets à optimiser, qui consiste en la création d'une instance d'objet de la classe de définition de stockage (mocStorageDefinition) dans laquelle sont déclarés le ou les attributs de la classe à optimiser qui seront indexés lors du stockage physique sur disque.

2. Procédé pour l'optimisation des accès à une base de données selon la revendication 1, caractérisé en ce qu'il comprend une deuxième étape consistant à écrire un fichier ISAM (Index Sequential Access Method, methode d'accès séquentiel par index) par classe d'objets administrés (MOC) optimisée, fichier spécifique avec sa structure d'index propre contenant la représentation de toutes les instances de cette MOC.

3. Procédé pour l'optimisation des accès à une base de données selon la revendication 1 ou 2, caractérisé en ce qu'il comprend une troisième étape consistant à analyser les filtres véhiculés par les opérations CMIS émises par les utilisateurs pour identifier dans une étape de préfiltrage si oui ou non l'évaluation de ce filtre peut se faire en utilisant un des index positionnés dans la base.

4. Procédé pour l'optimisation des accès à une base de données selon la revendication 1, caractérisé en ce que la valeur des index physiques pour les attributs spécifiés dans l'instance d'objets de la classe mocStorageDefinition correspondant à la MOC à optimiser comporte la référence unique du noeud de l'instance père (fatherMOlnodeRef) de l'instance de l'objet managé sur 4 octets de long dans le cas du stockage physique sur fichier ISAM et la succession des attributs 1 à i nécessaires à la classe d'objets managés à optimiser.

5. Procédé pour l'optimisation des accès à une base de données selon la revendication 3, caractérisé en ce que, lorsqu'un préfiltrage par les attributs indexés dans la base de données sous-jacente est utilisable, l'exécuteur des requêtes sur la base d'informations d'administration détermine les arguments de l'opération de lecture physique ne permettant de relire dans la base sous-jacente que les seuls subordonnés qui sont indexés par les valeurs des attributs sélectionnés pour le préfiltrage.

6. Procédé pour l'optimisation des accès à une base de données selon la revendication 1, caractérisé en ce que la classe d'objets administrés mocStorageDefinition permet de spécifier pour une MOC à optimiser une pluralité d'attributs indexables qui seront physiquement stockés dans l'index au moment de la création de l'objet.

7. Procédé pour l'optimisation des accès à une base de données selon la revendication 6, caractérisé en ce que la pluralité des index décrits dans l'objet administré mocStorageDefinition peut être réorganisée à tout moment par configuration en ligne du serveur CMIS-DB en réaffectant un niveau d'index différent à un ou plusieurs attributs ou en activant ou désactivant les index via la modification de l'objet de classe mocStorageDefinition.

8. Procédé pour l'optimisation des accès à une base de données selon une des revendications précédentes, caractérisé en ce que le module, qui exécute l'opération CMIS, effectue une analyse du filtre CMIS donné en argument de la requête permettant de détecter si un préfiltrage par la lecture dans la base de données sous-jacente d'un sous-ensemble des objets de la portée est possible. Si oui, le module lit physiquement les seuls objets de la portée qui sont indexés par les valeurs des attributs sélectionnnés pour le préfiltrage.

9. Procédé pour l'optimisation des accès à une base de données selon la revendication 8, caractérisé en ce que des moyens sont prévus pour permettre à l'utilisateur d'effectuer le choix de l'attribut ou du groupe d'attribut le plus discriminant en classant par ordre décroissant les index définis.

10. Procédé pour l'optimisation des accès à une base de données selon la revendication 8 ou 9, caractérisé en ce que l'optimiseur reconnaît les filtres qui peuvent donner lieu à un préfiltrage pour les index : ce sont les filtres constitués d'une clause ET englobant :
- un item d'égalité sur l'attribut objectClass, valeur égale à l'identifiant d'une des MOC optimisées,
- une expression logique constituée uniquement de clauses ET (AND) englobant des items de comparaison sur les attributs déclarés dans les index de cette MOC optimisée.
